(19) Europäisches Patentamt
European Patent Office
Office européen des brevets

(11) EP 2 737 000 B1

# (12) EUROPEAN PATENT SPECIFICATION

(45) Date of publication and mention of the grant of the patent:
**07.06.2017 Bulletin 2017/23**

(21) Application number: **12729501.2**

(22) Date of filing: **15.06.2012**

(51) Int Cl.:
***C09K 8/035*** *(2006.01)* ***C09K 8/60*** *(2006.01)*
***C08G 69/10*** *(2006.01)*

(86) International application number:
**PCT/EP2012/061408**

(87) International publication number:
**WO 2013/013889 (31.01.2013 Gazette 2013/05)**

## (54) USE OF HYPERBRANCHED POLYLYSINE AS SHALE INHIBITOR

VERWENDUNG VON HYPERVERZWEIGTEM POLYLYSIN ALS SCHIEFERINHIBITOR

UTILISATION DE POLYLYSINE COMME INHIBITEUR DE SCHISTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.07.2011 EP 11175680**

(43) Date of publication of application:
**04.06.2014 Bulletin 2014/23**

(73) Proprietor: **BASF SE**
**67056 Ludwigshafen am Rhein (DE)**

(72) Inventors:
- **LAFUENTE CERDA, Oscar**
  **85560 Ebersberg (DE)**
- **BRUCHMANN, Bernd**
  **67251 Freinsheim (DE)**
- **MAITRO-VOGEL, Sophie**
  **68199 Mannheim (DE)**
- **REINOSO GARCIA, Marta**
  **69221 Dossenheim (DE)**

(74) Representative: **Witz, Michael**
**BASF Construction Chemicals GmbH**
**Chemiepark Trostberg**
**Dr.-Albert-Frank-Strasse 32**
**83308 Trostberg (DE)**

(56) References cited:
**WO-A1-2004/011771 US-A- 5 908 814**
**US-A1- 2004 220 058 US-A1- 2008 058 229**

- **RÉGIS D. GOUGEON ET AL: "Direct Observation of Polylysine Side-Chain Interaction with Smectites Interlayer Surfaces through 1 H- 27 Al Heteronuclear Correlation NMR Spectroscopy", LANGMUIR, vol. 18, no. 8, 1 April 2002 (2002-04-01), pages 3396-3398, XP055016005, ISSN: 0743-7463, DOI: 10.1021/la0115381**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to the use of hyperbranched polylysine in the development, exploitation and completion of underground mineral oil and natural gas deposits, and in deep wells.

Shale is a fine impermeable sedimentary rock consisting of clay and other minerals. It is one of the most common rocks which have to be drilled through in oilfields to get to the oil layer. Due to its high proportion of ionically charged clay, shale has a great tendency to swell with water. This makes it a very problematic rock in deep wells with water-based drilling muds. A "shale inhibitor" has the function of preventing the shale from swelling with water. The document US 2004/220058 discloses a method for stabilising a subterranean formationcomprising a shale, said method comprising introduction of a treatment fluid comprising a hydrophilically modified polymer, including a polylysin which has been reacted with a hydrophilic compound. EP 0634468 A1 describes additives for drilling muds and methods which prevent the swelling of clays in underground wells. In one embodiment, a trihydroxyalkylamine is reacted with an alkyl halide or a water-soluble quaternary amine to give a quaternized trihydroxyalkylamine. The reaction products may also include condensed reaction products of quaternized trihydroxyalkylamines. In a further embodiment, a choline derivative is used. The quaternized reaction products and the choline derivatives are notable for low toxicity and good compatibility with anionic drilling mud components. There are reports of an improvement in rheological properties of the drilling muds and of an improvement in the environmental compatibility and compatibility with the drilling muds.

US 6,484,821 B1 describes a water-based drilling mud for drilling through formations comprising water-swellable shale. This preferably comprises a water-based continuous phase, a weighting material and a shale hydration inhibition agent of the formula $H_2N\text{-}R\text{-}\{OR'\}_x\text{-}Y$ where R and R' are each alkylene groups having 1-6 carbon atoms and x corresponds to a value of about 1 to about 25. The Y group should be an amine or alkoxy group, preferably a primary amine or a methoxy group. The shale hydration inhibition agent should be present in a concentration sufficient for the reduction of the swelling of the shale. EP 1257610 B1, which is parallel to US 6,484,821 B1, more precisely specifies a compound of the formula $H_2N\text{-}CH(CH_3)CH_2\text{-}\{OCH_2CH(CH_3)\}_x\text{-}NH_2$ as a shale inhibitor, where x has a value of less than 15.

WO 2008/031806 A1 describes neutral or salt-type condensation products of $C_{4}$-$_{10}$-dicarboxylic acids with alkanolamines, diamines or polyalkyleneamines as shale inhibitors.

US 5,149,690 describes drilling mud additives which suppress the swelling of shale, in the form of polyamides and polyamino acids as reaction products of an aliphatic acid with an aliphatic polyamine. The "polyamino acids" mentioned therein are structurally incomparable to polylysine, especially because they have free acid functions whereas polylysine has free amine functions.

Chemicals for offshore applications must meet strict environmental regulations. They must be nontoxic and biodegradable, and must not be bioaccumulable; see http://www.cefas.defra.gov.uk, especially http://www.cefas.defra.gov.uk/industry-information/offshore-chemical-notification-scheme.aspx, http://www.cefas.defra.gov.uk/industry-information/offshore-chemical-notification-scheme/ocns-ecotoxicology-testing.aspx and http://www.cefas.defra.gov.uk/industry-information/offshore-chemical-notification-scheme/hazard-assessment.aspx (retrieved 01.06.2011).

The problem underlying the present invention was that of providing a nontoxic biodegradable non-bioaccumulable advantageous shale inhibitor.

This object is achieved by the features of the independent claim. The dependent claims relate to preferred embodiments.

It has been found that, surprisingly, hyperbranched polylysine, especially quaternized hyperbranched polylysine, is a very good shale inhibitor and is also biodegradable.

The present invention provides for the use of hyperbranched polylysine in the development, exploitation and completion of underground mineral oil and natural gas deposits, and in deep wells, especially as a shale inhibitor in water-based drilling muds, completion fluids or stimulation fluids for stimulation of underground mineral oil and natural gas deposits, wherein the degree of branching (DB) as defined in

DB [%] = 100 * (T + Z) / (T + Z + L) where T is the mean number of terminal monomer units, Z is the mean number of branched monomer units and L is the mean number of linear monomer units, is from 10 to 99.9%, preferably from 20 to 99%, more preferably from 20 to 95%, and the molecular weight ($M_w$) of the polylysine is in the range of 500 to 10 000 g/mol, preferably in the range of 750 to 7 500 g/mol, more preferably in the range of 750 to 5 000 g/mol, and particularly in the range of 750 to 1 500 g/mol.

In the context of the present invention, the generic term "polylysine" includes straight-chain, branched, hyperbranched and dendrimeric polylysines. Polylysine is a polycondensation product of the amino acid lysine. Polylysine may be of the following general formula (I), since the terminal $\varepsilon$-amino function of the molecule is more readily accessible to further condensation than the $\alpha$-amino group.

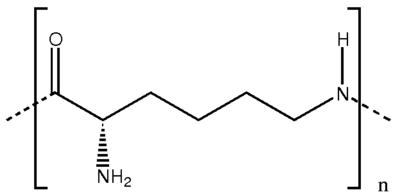

(I)

However, the α-amino group also exhibits a certain reactivity, and so branched, hyperbranched and even dendrimeric polylysines are obtainable. In our WO 2007/060119 A1 we describe syntheses which lead to hyperbranched polylysines.

For a definition of hyperbranched and dendrimeric polymers see also P.J. Flory, J. Am. Chem. Soc. 1952, 74, 2718 and H. Frey et al., Chemistry - A European Journal, 2000, 6, No. 14, 2499.

The term "hyperbranched" in the context of the present invention is to be understood to mean that the degree of branching (DB) is 10 to 99.9%, preferably 20 to 99%, more preferably 20 to 95%. "Dendrimeric", in contrast, is to be understood to mean that the degree of branching is 99.9 to 100%. These definitions correspond to the definitions according to WO 2007/060119 A1.

The degree of branching of the hyperbranched polylysine of the invention is defined as

$$DB\,[\%] = 100 * (T + Z) / (T + Z + L)$$

where T is the mean number of terminal monomer units, Z is the mean number of branched monomer units and L is the mean number of linear monomer units. For the definition of the degree of branching see also H. Frey et al., Acta Polym. 1997, 48, 30.

The molecular weight ($M_w$) of the hyperbranched polylysine of the invention is in the range of 500 to 10 000 g/mol, preferably in the range of 750 to 7 500 g/mol, particularly in the range of 750 to 5 000 g/mol and especially in the range of 750 to 1500 g/mol.

The nitrogen atoms of the polylysine are preferably quaternized with $C_{1-4}$-alkyl groups. The quaternizing agent used may, for example, be a $C_{1-4}$-haloalkane, especially a bromo- or iodoalkane, or dimethyl sulphate. Preference is given to virtually complete quaternization. This can be determined, for example, using the amine number of the quaternized polylysine, i.e. that amount of KOH in mg which is equivalent to the remaining amine content of 1 g of polylysine. More preferably, no free amine functions are present any longer in the quaternized polylysine.

The polylysine is appropriately used in a concentration of 1 to 30 g/l, preferably 3 to 25 g/l and especially 5 to 10 g/l of water. It is preferably used together with water retention agents, rheology modifiers, dispersants, thinners, lubricants and/or other compositions commonly used in drilling muds, completion fluids or stimulation fluids.

The biodegradability of the polylysine used in accordance with the invention, measured by the method described in "OECD Guidelines for Testing of Chemicals - 1992 OECD 306: Biodegradability in Seawater, Closed Bottle Method", is preferably at least 15% after 28 days and preferably at least 50% after 60 days.

The present invention is now illustrated in detail by the examples which follow with reference to the appended drawing. The drawing shows:

Fig. 1 a graphic representation of the Fann 35 values according to Table 2.

EXAMPLES

Preparation of the polylysines

Example 1:

A 4 l four-necked flask equipped with stirrer, internal thermometer, gas inlet tube and descending condenser with vacuum connection and collecting vessel was charged with 1000 g of L-lysine hydrochloride, 219.1 g of solid sodium hydroxide, 100 g of water and 0.02 g of dibutyltin dilaurate, and the mixture was heated gradually to an internal temperature of 130°C while stirring, in the course of which the mixture foamed slightly. After a reaction time of 5 hours, water was distilled off under reduced pressure (200 mbar), in the course of which the temperature was increased gradually to 160°C and the pressure reduced to 10 mbar after the majority of the water had distilled over. After 8 hours, 260 g of water had been collected as distillate. The high-viscosity polymer was discharged while hot and poured into an aluminium dish.

To determine the molecular weight distribution, the product was dissolved in water, and the solution was filtered and analyzed by GPC. The GPC was conducted by means of a column combination of OHpak SB-803 HQ and SB-804 HQ (from Shodex) with addition of 0.1 mol/l sodium hydrogencarbonate at 30°C with a flow rate of 0.5 ml/min and polyethylene oxide as a standard. For detection, a UV detector was used, which worked at a wavelength of 230 nm. The mean molecular weight was determined as $M_n$ = 1400 g/mol and $M_w$ = 4300 g/mol.

The degree of branching (DB) was 0.35 (i.e. 35%). It was determined by the method described in M. Scholl, T.Q. Nguyen, B. Bruchmann, H.-A Klok, J. Polym. Sci.: Part A: Polym. Chem. 45, 2007, 5494-5508.

The amine number (AN) was determined on the basis of DIN 53176. However, in contrast to the DIN method specified, this involved titration with a glacial acetic acid/trifluoromethanesulphonic acid mixture and potentiometric determination of the end point. The amine number was 278 mg KOH/g.

Example 2:

A 4 l four-necked flask equipped with stirrer, internal thermometer, gas inlet tube and descending condenser with vacuum connection and collecting vessel was charged with 1000 g of L-lysine hydrochloride, 219.1 g of solid sodium hydroxide, 150 g of water and 0.1 g of dibutyltin dilaurate, and the mixture was heated gradually to an internal temperature of 150°C while stirring, in the course of which the mixture foamed slightly and water distilled off at standard pressure. After a reaction time of 4 hours, distillative removal continued under reduced pressure (400 mbar), in the course of which the temperature was increased gradually to 160°C. After 8 hours, 340 g of water had been collected as distillate. The high-viscosity polymer was discharged while hot and poured into an aluminium dish.

The mean molecular weight, the amine number and the degree of branching were determined according to the details of Example 1. $M_n$ = 1200 g/mol and $M_w$ = 2800 g/mol; the AN was 310 mg KOH/g and the DB was 0.41 (i.e. 41 %).

Example 3:

A 4 l four-necked flask equipped with stirrer, internal thermometer, gas inlet tube and descending condenser with vacuum connection and collecting vessel was charged with 1000 g of L-lysine hydrochloride, 219.1 g of solid sodium hydroxide, 150 g of water and 0.02 g of dibutyltin dilaurate, and the mixture was heated gradually to an internal temperature of 130°C while stirring, and the temperature was increased gradually up to 150°C over the course of 5 hours. During this reaction time, 218 g of water were distilled off under reduced pressure. The pressure was then reduced to 200 mbar and the internal temperature increased to 160°C, in the course of which another 88 g of water distilled over. The high-viscosity polymer was discharged while hot and poured into an aluminium dish.

The mean molecular weight, the amine number and the degree of branching were determined according to the details of Example 1. $M_n$ = 660 g/mol and $M_w$ = 950 g/mol; the AN was 379 mg KOH/g and the DB was 0.57 (i.e. 57%).

Quaternization of the polylysines

Example 1a:

A 500 ml flask with stirrer is initially charged with the polylysine from Example 1 (100.9 g), which is diluted with water (100.9 g). Dimethyl sulphate (1 mol, 126.1 g) is metered in gradually. The reaction mixture is stirred at room temperature for two days. The conversion (degree of quaternization) is monitored via the amine number. After two days, the amine number is 0.08 mmol/g and the degree of quaternization is 95%. The excess dimethyl sulphate is hydrolyzed at 80°C for 6 hours. A brown solution is obtained (280.9 g, solids content 67%).

Example 2a:

A 500 ml flask with stirrer is initially charged with the polylysine from Example 2 (90.5 g), which is diluted with water (90.5 g). Dimethyl sulphate (1 mol, 126.1 g) is metered in gradually. The reaction mixture is stirred at room temperature for two days. The conversion (degree of quaternization) is monitored via the amine number. After two days, the amine number is 0.00 mmol/g and the degree of quaternization is 100%. The excess dimethyl sulphate is hydrolyzed at 80°C for 6 hours. A brown solution is obtained (242.5 g, solids content 70%).

Example 3a:

A 500 ml flask with stirrer is initially charged with the polylysine from Example 3 (70.4 g), which is diluted with water (74.0 g). Dimethyl sulphate (1 mol, 126.1 g) is metered in gradually. The reaction mixture is stirred at room temperature for two days. The conversion (degree of quaternization) is monitored via the amine number. After two days,

the amine number is 0.00 mmol/g and the degree of quaternization is 100%. The excess dimethyl sulphate is hydrolyzed at 80°C for 6 hours. A brown solution is obtained (287.7 g, solids content 64%).

Performance tests

350 ml of tap water are introduced into a beaker, 2.5 g of the shale inhibitor (calculated as dry mass - i.e. quaternized or non-quaternized polylysine or a prior art product) are added and the mixture is stirred for 20 min. The solution is transferred into an HB mixing cup. 30 g of Cebogel® NT (Bentonite, Cebo Holland B.V., The Netherlands) are added as a model substance for shale and the mixture is stirred at low speed for 10 min. Subsequently, the Fann rheology and the gel strength are determined.

The shale inhibitors (Examples 1-3 and Examples 1a-3a) according to the invention and Comparative shale inhibitors (Comparative 1-3) are listed in Table 1 below.

Table 1

| Sample | Mn | Mw | AN | Solids [%] | Sample | Solids [%] |
|---|---|---|---|---|---|---|
| Example 1 | 1400 | 4300 | 278 | 100 | Example 1a | 67 |
| Example 2 | 1150 | 2840 | 310 | 100 | Example 2a | 70 |
| Example 3 | 660 | 948 | 379 | 100 | Example 3a | 64 |
| Comp. 1 | Basodrill® 3200 (shale inhibitor from BASF SE) | | | | | |
| Comp. 2 | Ultrahib® (shale inhibitor from M-I SWACO) | | | | | |
| Comp. 3 | Cholinchlorid (BASF SE) | | | | | |

The results are reproduced in Table 2 below and in graphic form in Fig. 1.

Table 2

| **7.14 g/l Shale Inhibitor and 85.7 g/l Bentonite** | | | | | | | | | | | |
|---|---|---|---|---|---|---|---|---|---|---|---|
| | | | | | | | | | | | |
| **Sample** | **Fann 35 values [Pa]** | | | | | | **Gel strength [Pa]** | | **PV** | **YP** | **pH** |
| | **600** | **300** | **200** | **100** | **6** | **3** | **10"** | **10'** | **[mPa*s]** | **[Pa]** | |
| Example 1 | 32 | 28 | 27 | 26 | 18 | 16 | 12 | 11 | 7 | 25 | 9.0 |
| Example 1a | 19 | 15 | 14 | 12 | 10 | 10 | 9 | 18 | 7 | 12 | 9.0 |
| Example 2 | 19 | 15 | 14 | 12 | 12 | 11 | 10 | 17 | 8 | 11 | 9.0 |
| Example 2a | 9 | 6 | 5 | 4 | 3 | 4 | 4 | 8 | 6 | 3 | 9.1 |
| Example 3 | 14 | 11 | 10 | 9 | 8 | 8 | 9 | 15 | 6 | 8 | 9.0 |
| Example 3a | 6 | 4 | 3 | 2 | 2 | 2 | 2 | 4 | 4 | 2 | 9.1 |
| Comp 1 | 13 | 12 | 12 | 13 | 12 | 11 | 9 | 9 | 4 | 10 | 9.1 |
| Comp 2 | 13 | 14 | 14 | 14 | 12 | 9 | 6 | 5 | -2 | 15 | 9.1 |
| Comp 3 | 8 | 6 | 6 | 5 | 4 | 4 | 3 | 3 | 3 | 5 | 9.1 |
| Blank | 15 | 11 | 10 | 8 | 6 | 6 | 10 | 19 | 8 | 7 | 9.2 |

Rheology at different pH values

The performance tests on the samples according to Example 2a and Comparative sample 2 are repeated at different pH values. The results are reproduced in Table 3. It is found that the pH value affects the inventive sample (Example 2a) much less than Comp. sample 2 (Ultrahib®).

Table 3

| Sample | Fann 35 values [Pa] | | | | | | Gel strength [Pa] | | PV | YP | pH |
|---|---|---|---|---|---|---|---|---|---|---|---|
| | 600 | 300 | 200 | 100 | 6 | 3 | 10" | 10' | [mPa*s] | [Pa] | |
| Example 2a | 9 | 6 | 5 | 4 | 3 | 4 | 4 | 8 | 6 | 3 | 9.0 |
| | 10 | 7 | 6 | 5 | 5 | 5 | 5 | 8 | 6 | 4 | 7.0 |
| | 12 | 9 | 8 | 7 | 6 | 7 | 7 | 12 | 6 | 6 | 5.0 |
| | 12 | 10 | 9 | 7 | 7 | 7 | 7 | 8 | 6 | 7 | 3.0 |
| | 12 | 8 | 7 | 6 | 7 | 7 | 6 | 13 | 7 | 5 | 0.0 |
| Comp. 2 | 13 | 14 | 14 | 14 | 12 | 9 | 6 | 5 | -2 | 15 | 9.0 |
| | 19 | 17 | 18 | 19 | 12 | 12 | 8 | 8 | 5 | 14 | 7.0 |
| | 13 | 10 | 10 | 9 | 10 | 9 | 6 | 7 | 6 | 7 | 5.0 |
| | 12 | 11 | 12 | 13 | 11 | 10 | 5 | 6 | 3 | 9 | 3.0 |
| | 22 | 22 | 22 | 23 | 11 | 10 | 9 | 7 | 1 | 21 | 0.0 |

Biodegradability

According to the method described in "OECD Guidelines for Testing of Chemicals - 1992 OECD 306: Biodegradability in Seawater, Closed Bottle Method", the biodegradability of the quaternized polylysine according to Example 3a, of Comp. sample 2 (Ultrahib®) and of a reference substance (sodium benzoate) was evaluated after 28 days and 60 days.

Table 4

| Material | Day 28 | Day 60 |
|---|---|---|
| Example 3a | 38% | 52% |
| Comp. 2 | <10% | - |
| Reference | 80% | 70% |

The results indicate a much better biodegradability of the quaternized polylysine according to Example 3a than Ultrahib®, a commercial shale inhibitor. Moreover, the 28 day biodegradability of the quaternized polylysine according to Example 3a meets the regulatory requirements.

## Claims

1. Use of hyperbranched polylysine in the development, exploitation and completion of underground mineral oil and natural gas deposits, and in deep wells, especially as a shale inhibitor in water-based drilling muds, completion fluids or stimulation fluids,
   wherein the degree of branching (DB) as defined in

$$DB\,[\%] = 100 * (T + Z) / (T + Z + L)$$

   where T is the mean number of terminal monomer units, Z is the mean number of branched monomer units and L is the mean number of linear monomer units, is from 10 to 99.9%, preferably from 20 to 99%, more preferably from 20 to 95%,
   and the molecular weight ($M_w$) of the polylysine is in the range of 500 to 10 000 g/mol, preferably in the range of 750 to 7 500 g/mol, more preferably in the range of 750 to 5 000 g/mol, and particularly in the range of 750 to 1 500 g/mol.

2. Use according to Claim 1, **characterized in that** the nitrogen atoms of the polylysine are quaternized with $C_{1-4}$-alkyl groups.

**3.** Use according to Claim 1 or 2, **characterized in that** the polylysine is used in a concentration of 1 to 30 g/l, preferably 3 to 25 g/l and especially 5 to 10 g/l of water.

## Patentansprüche

**1.** Verwendung von hyperverzweigtem Polylysin bei der Erschließung, Ausbeutung und Komplettierung unterirdischer Erdöl- und Erdgaslagerstätten sowie bei Tiefenbohrungen, insbesondere als Shale Inhibitor in wasserbasierten Bohrspülungen, Komplettierungsflüssigkeiten oder Stimulationsflüssigkeiten,
wobei der Verzweigungsgrad (Degree of Branching, DB) gemäß Definition in

$$DB [\%] = 100 * (T + Z) / (T + Z + L),$$

wobei T die mittlere Anzahl der terminalen Monomereinheiten, Z die mittlere Anzahl der verzweigten Monomereinheiten und L die mittlere Anzahl der linearen Monomereinheiten bedeutet, 10 bis 99,9%, vorzugsweise 20 bis 99%, weiter bevorzugt 20 bis 95%, beträgt
und das Molekulargewicht ($M_w$) des Polylysins im Bereich von 500 bis 10.000 g/mol, vorzugsweise im Bereich von 750 bis 7500 g/mol, weiter bevorzugt im Bereich von 750 bis 5000 g/mol und insbesondere im Bereich von 750 bis 1500 g/mol liegt.

**2.** Verwendung nach Anspruch 1, **dadurch gekennzeichnet, dass** die Stickstoffatome des Polylysins mit $C_{1-4}$-Alkylgruppen quaternisiert sind.

**3.** Verwendung nach Anspruch 1 oder 2, **dadurch gekennzeichnet, dass** das Polylysin in einer Konzentration von 1 bis 30 g/l, vorzugsweise 3 bis 25 g/l und insbesondere 5 bis 10 g/l Wasser eingesetzt wird.

## Revendications

**1.** Utilisation de polylysine hyperramifiée dans le développement, l'exploitation et le conditionnement de dépôts souterrains d'huile minérale et de gaz naturel, et dans des puits profonds, en particulier en tant qu'inhibiteur de schiste dans des boues de forage à base d'eau, des fluides de conditionnement ou des fluides de stimulation,
dans laquelle le degré de ramification (DB) tel que défini dans

$$DB [ \%] = 100 * (T + Z) / (T + Z + L)$$

où T est le nombre moyen de motifs monomères terminaux, Z est le nombre moyen de motifs monomères ramifiés et L est le nombre moyen de motifs monomères linéaires, est de 10 à 99,9 %, de préférence de 20 à 99 %, plus préférablement de 20 à 95 %,
et le poids moléculaire ($M_w$) de la polylysine est dans la plage de 500 à 10 000 g/mol, de préférence dans la plage de 750 à 7 500 g/mol, plus préférablement dans la plage de 750 à 5 000 g/mol, et particulièrement dans la plage de 750 à 1 500 g/mol.

**2.** Utilisation selon la revendication 1, **caractérisée en ce que** les atomes d'azote de la polylysine sont quaternarisés avec des groupes alkyle en $C_{1-4}$.

**3.** Utilisation selon la revendication 1 ou 2, **caractérisée en ce que** la polylysine est utilisée à une concentration de 1 à 30 g/l, de préférence de 3 à 25 g/l et particulièrement de 5 à 10 g/l d'eau.

Fig. 1

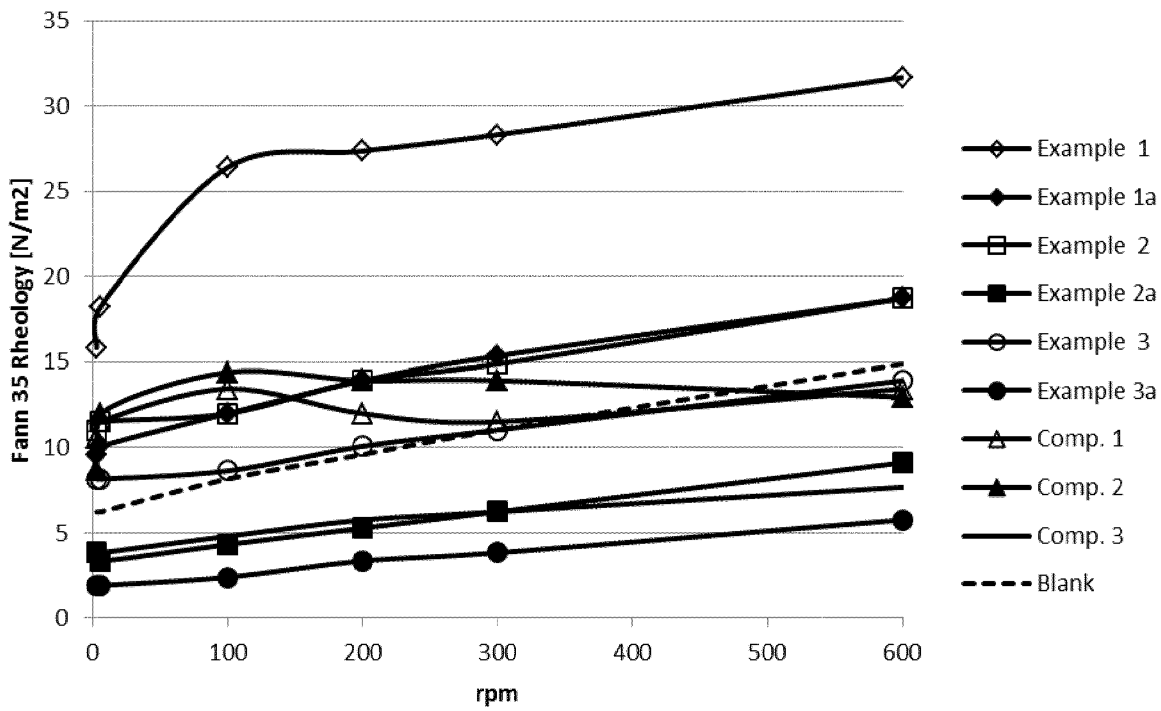
35
30
25
20
15
10
5
0
Fann 35 Rheology [N/m2]
0
100
200
300
400
500
600
rpm
Example 1
Example 1a
Example 2
Example 2a
Example 3
Example 3a
Comp. 1
Comp. 2
Comp. 3
Blank

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2004220058 A
- EP 0634468 A1
- US 6484821 B1
- EP 1257610 B1
- WO 2008031806 A1
- US 5149690 A
- WO 2007060119 A1


### Non-patent literature cited in the description


- **P.J. FLORY.** *J. Am. Chem. Soc.,* 1952, vol. 74, 2718
- **H. FREY et al.** *Chemistry - A European Journal,* 2000, vol. 6 (14), 2499
- OECD 306: Biodegradability in Seawater, Closed Bottle Method. *OECD Guidelines for Testing of Chemicals,* 1992
- **M. SCHOLL ; T.Q. NGUYEN ; B. BRUCHMANN ; H.-A KLOK.** *J. Polym. Sci.: Part A: Polym. Chem.,* 2007, vol. 45, 5494-5508